# EUROPÄISCHE PATENTSCHRIFT

(11) **EP 0 530 467 B1**
(45) Veröffentlichungstag und Bekanntmachung des Hinweises auf die Patenterteilung: **14.06.1995**
(21) Anmeldenummer: 92111703.2
(22) Anmeldetag: 09.07.1992
(51) Int. Cl.: F16L 55/00, H02G 9/02

(54) **Warnband**
Warning band
Ruban de signalisation

(30) Priorität: 27.08.1991 DE 4128384
(43) Veröffentlichungstag der Anmeldung: 10.03.1993
(73) Patentinhaber: KELMAPLAST, G. KELLERMANN GmbH, D-45549 Sprockhövel (DE)
(72) Erfinder: Kohlstadt, Markus, W-4322 Sprockhövel (DE)
(74) Vertreter: Mentzel, Norbert, Dipl.-Phys.

(56) Entgegenhaltungen:
- EP-A- 0 239 510
- DE-A- 2 631 939
- US-A- 4 623 282
- US-A- 4 988 236

## Beschreibung

Die Erfindung betrifft ein Band, das aus Warnfarbe aufweisender Kunststoffolie mit verhältnismäßig großer Reißfestigkeit besteht und mit Abstand oberhalb von unterirdischen Leitungen für Strom, Gas, Wasser od. dgl. im Erdreich verlegbar ist und insbesondere bei maschinell durchzuführenden Erdarbeiten auf die darunterliegenden Leitungen hinweist, wobei die das Band bildende Kunststoffolienbahn in vorbestimmten Längsabständen mit perforierten Reißlinien für ein Zerreißen in vorbestimmter Form vorbereitet ist. Ein Band dieser Art ist aus der Schrift EP-A-0 239 510 bekannt.

Beim maschinellen Ausheben von Gräben, Gruben od.dgl. kommt es immer wieder vor, daß die zum Ausheben des Erdreiches verwendeten Maschinen solche Leitungen erfassen und beschädigen und manchmal auch vollständig durchtrennen. Um dieses zu vermeiden, wird mit Abstand oberhalb von unterirdischen Leitungen das Warnband verlegt, welches eine solche Reißfestigkeit aufweist, daß es das Verlegen und das Zuschütten mit Erdreich und dessen Verfestigung aushält. Beim maschinellen Aushub von Erdreich wird die Maschine zunächst das Warnband erfassen und hochreißen, wobei das Warnband in der Regel durchreißt. Dem Maschinenführer wird somit angezeigt, daß unterhalb des Warnbandes eine Leitung für Strom, Gas, Wasser od.dgl. verlegt und ein weiteres maschinelles Arbeiten an dieser Stelle nicht mehr möglich ist.

Die neueren Aushubmaschinen arbeiten jedoch sehr schnell, und das Band kann auch zu beiden Seiten der Maschine gleichzeitig abreißen, so daß der Maschinenführer ein Erfassen eines Warnbandes übersehen kann oder anschließend nicht mehr sehen kann, an welcher Stelle das Warnband erfaßt wurde.

Der Erfindung liegt die Aufgabe zugrunde, ein Warnband der eingangs erläuterten Art zu verbessern und derart auszubilden, daß es beim Hochreißen mit der Maschine in vorbestimmter Weise reißt und aus dem Erdreich herausragende Bandenden verbleiben, die dem Maschinenführer den Verlauf der Leitungen anzeigen.

Diese Aufgabe wird mit einem Band gemäß Anspruch 1 gelöst. Die perforierten Reißlinien bilden somit in einfacher Weise Sollreißstellen für das Band. Da die perforierten Reißlinien mit einem verhältnismäßig kleinen Winkel schräg zur Bandlängsrichtung verlaufen, überlappen sich die durch ein Zerreißen gebildeten Enden der das Band bildenden Kunststoffolienbahn, so daß nach einem Zerreißen des Bandes zuverlässig zu beiden Seiten der Maschine aus dem Erdreich die Bandenden heraushängen und dem Maschinenführer eindeutig die Lage und den Verlauf von darunterliegenden Leitungen anzeigen.

Jede der mit einem verhältnismäßig kleinen Winkel schräg zur Bandlängsrichtung verlaufenden Reißlinien können dabei insbesondere geradlinig die gesamte Breite des Bandes durchqueren. Dadurch erfassen in einfacher Weise die Reißlinien die gesamte Breite des Bandes, so daß die Sollreißstellen über die gesamte Breite des Bandes verlaufen.

Die das Band bildende Kunststoffolienbahn kann in mindestens zwei trennbar zusammenhängende Bandstreifen unterteilt sein und die mit einem verhältnismäßig kleinen Winkel schräg zur Bandlängsrichtung verlaufenden Reißlinien 11, 12 insbesondere geradlinig jeweils die Breite der Bandstreifen 15 durchqueren. Dadurch ist in einfacher Weise das Band in zwei Bandstreifen unterteilt, die trennbar zusammenhängen. Beim Reißen des Bandes entlang der mit einem kleinen Winkel schräg zur Bandlängsrichtung verlaufenden Reißlinien können sich auch die Bandstreifen voneinander lösen, um lange, durch das Reißen gebildete Enden zu bilden, die nach dem Zerreißen des Bandes aus dem Erdreich heraushängen.

Die das Band bildenden Bandstreifen können mit einer perforierten Teillinie trennbar miteinander verbunden sein. Dadurch sind in einfacher Weise die das Band bildenden Bandstreifen trennbar miteinander verbunden.

Jede der mit einem verhältnismäßig kleinen Winkel schräg zur Bandlängsrichtung verlaufenden Reißlinien können an der einen Längskante des Bandes bzw. des Bandstreifens beginnen und in einem Abstand in Bandlängsrichtung von mindestens 1 m an der anderen Längskante des Bandes bzw. des Bandstreifens enden. An jeder perforierten Reißlinie der Kunststoffolienbahn überlappen sich somit vor dem Zerreißen die durch das Zerreißen gebildeten Bandenden um mindestens 1 m. Diese Überlappung von mindestens 1 m der beim Zerreißen gebildeten Bandenden reicht aus, damit nach dem Zerreißen des Bandes die Bandenden zu beiden Seiten der Maschine aus dem Erdreich herausragen.

Jede der mit einem verhältnismäßig kleinen Winkel schräg zur Bandlängsrichtung verlaufenden Reißlinien kann an der einen Längskante des Bandes bzw. des Bandstreifens beginnen und in einem Abstand in Bandlängsrichtung von etwa 1,5 m an der anderen Längskante des Bandes bzw. des Bandstreifens enden. Damit beträgt die vor dem Zerreißen des Bandes vorgesehene Überlappung der durch das Zerreißen gebildeten Bandenden etwa 1,5 m und gewährleistet besonders zuverlässig ein Heraushängen von beiden Bandenden zu beiden Seiten der Maschine aus dem Erdreich.

Die mit einem verhältnismäßig kleinen Winkel schräg zur Bandlängsrichtung angeordneten Reißlinien können im wesentlichen parallel zueinander mit einem Abstand in Bandlängsrichtung von mindestens 1 m verlaufen. Dadurch wird in einfacher Weise gewährleistet, daß in Verbindung mit dem Schrägverlauf der Reißlinien jede Stelle der Kunststoffolienbahn von einer Reißlinie erfaßt ist. Egal an welcher Stelle der Kunststoffolienbahn eine Maschine beim Erdaushub angreift, so ist in diesem erfaßten Bereich eine perforierte Reißlinie vorhanden, so daß die Kunststoffolienbahn in vorbestimmter Weise zerreißen kann.

Die mit einem verhältnismäßig kleinen Winkel schräg zur Bandlängsrichtung angeordneten, parallelen Reißlinien können mit einem Abstand in Bandlängsrichtung von etwa 1,5 m verlaufen. Dieser Abstand von 1,5 m in Verbindung mit dem Schrägverlauf der Reißlinien von etwa 1,5 m in Längsrichtung des Bandes ermöglicht in einfacher und zuverlässiger Weise ein Zerreißen der Kunststoffolienbahn an jeder Stelle der Kunststoffolienbahn, wobei die verhältnismäßig große Überlappung eine zuverlässige Anzeige durch die herausragenden freien Enden des Bandes ergeben.

Die mit einem verhältnismäßig kleinen Winkel schräg zur Bandlängsrichtung angeordneten Reißlinien können in abwechselnder Reihenfolge entgegengesetzt schräg verlaufen. Dadurch wird eine besonders einfache Fertigung der perforierten Reißlinien erzielt, da das Perforierungswerkzeug beim Vorbeiführen der Kunststoffolienbahn lediglich eine hin- und hergehende Bewegung quer zur Bandlängsrichtung ausführen kann. Das vorbestimmte Zerreißen des Bandes entlang der Reißlinien wird dabei nicht beeinträchtigt.

Jeweils die benachbarten, in abwechselnder Reihenfolge entgegengesetzt schräg verlaufenden Reißlinien können an den Längskanten des Bandes bzw. des Bandstreifens aneinanderstoßen. Dadurch werden in einfacher Weise Abschnitte an der Kunststoffolienbahn vermieden, die von keiner perforierten Reißlinie durchquert werden.

Bei aus mindestens zwei Bandstreifen bestehenden Bändern können die in dem einen Bandstreifen vorgesehenen Reißlinien in Längsrichtung des Bandes gegenüber den Reißlinien des benachbarten Bandstreifens versetzt sein. Dadurch wird in einfacher Weise erreicht, daß die Reißlinien des einen Bandstreifens die Reißlinien des zweiten Bandstreifens überlappen, so daß beim Zerreißen des Bandes in zuverlässiger Weise lange Bandenden geschaffen werden, die aus dem Erdreich herausragen und dem Maschinenführer den Verlauf der Leitungen anzeigen.

Auf der das Band bildenden und die Reißlinien aufweisende Kunststoffolienbahn kann mindestens einseitig eine zweite Kunststoffolienbahn mit einer geringen Reißfestigkeit aufgelegt und durch Kleben, Schweißen od.dgl. befestigt sein. Dadurch kann in einfacher und zuverlässiger Weise die Reißfestigkeit des Warnbandes erhöht werden, ohne ein Reißen der Kunststoffolienbahn an der perforierten Reißlinie zu behindern.

Von den beiden aufeinanderliegenden Kunststoffolienbahnen kann mindestens eine durchsichtig sein,und mindestens eine der beiden Kunststoffolienbahnen auf der der anderen Kunststoffolienbahn zugekehrten Seite einen Farbdruck und/oder eine Beschriftung aufweisen. Dieser Farbdruck kann dabei die Warnfarbe oder die Beschriftung bilden. Die Warnfarbe und/oder die Beschriftungen sind dabei durch die aufgelegte andere Kunststoffolienbahn gegen äußere Einflüsse, wie Feuchtigkeit od.dgl., geschützt.

In der Zeichnung ist die Erfindung in drei Ausführungsbeispielen dargestellt, und zwar zeigen:
- Fig. 1: ein erstes Ausführungsbeispiel des erfindungsgemäßen Bandes in Draufsicht, teilweise weggebrochen,
- Fig. 2: ein zweites Ausführungsbeispiel des erfindungsgemäßen Bandes in Draufsicht und teilweise weggebrochen, und
- Fig. 3: ein drittes Ausführungsbeispiel des erfindungsgemäßen Bandes in Draufsicht und teilweise weggebrochen.

Das erfindungsgemäße Band 10 besteht aus Warnfarbe aufweisender Kunststoffolie mit verhältnismäßig großer Reißfestigkeit und ist mit Abstand oberhalb von unterirdischen Leitungen für Strom, Gas, Wasser od.dgl. im Erdreich zu verlegen, um insbesondere bei maschinell durchzuführenden Erdarbeiten auf die darunterliegenden Leitungen hinzuweisen. Das Band 10 wird dabei von einer Kunststoffolienbahn gebildet, wobei die Kunststoffolie aus Polypropylen besteht. Die Reißfestigkeit der Kunststoffolienbahn ist dabei so groß, daß das Verlegen ohne Schwierigkeiten erfolgen und den Belastungen im verlegten Zustand im Erdreich aushalten kann.

Die das Band 10 bildende und eine verhältnismäßig große Reißfestigkeit aufweisende Kunststoffolienbähn ist in vorbestimmten Längsabständen mit perforierten Reißlinien 11, 12 für ein ggf. beim Erdaushub erfolgendes Zerreißen vorbereitet, wobei jede Reißlinie 11, 12 die Kunststoffolienbahn mit einem verhältnismäßig kleinen Winkel zur Bandlängsrichtung schräg durchquert. Jede der die Kunststoffolienbahn mit einem verhältnismäßig kleinen Winkel zur Bandlängsrichtung schräg durchquerenden Reißlinien 11, 12 verläuft geradlinig. Jede Reißlinie 11, 12 beginnt dabei an der einen Längskante 13 der Kunststoffolienbahn 10 und endet in einem Abstand in Bandlängsrichtung von etwa 1,5 m an der anderen Längskante 14 des Bandes 10. Durch diese Ausbildung der Reißlinien 11, 12 wird in zuverlässiger Weise erreicht, daß bei einem Zerreißen des Bandes 10 bei maschinell durchzuführenden Erdarbeiten das Band 10 durch das Zerreißen entlang der Reißlinien 11, 12 lange Enden bildet, die nach dem Zerreißen aus dem Erdreich neben der Maschine herausragen und den Maschinenführer anzeigen, in welcher Richtung die darunterliegende Leitung verläuft. Die Reißlinien 11, 12 müssen dabei jedoch derart ausgebildet sein, daß ein Zerreißen jeweils nur entlang einer Reißlinie 11, 12 erfolgt und nicht quer durch das Band 10.

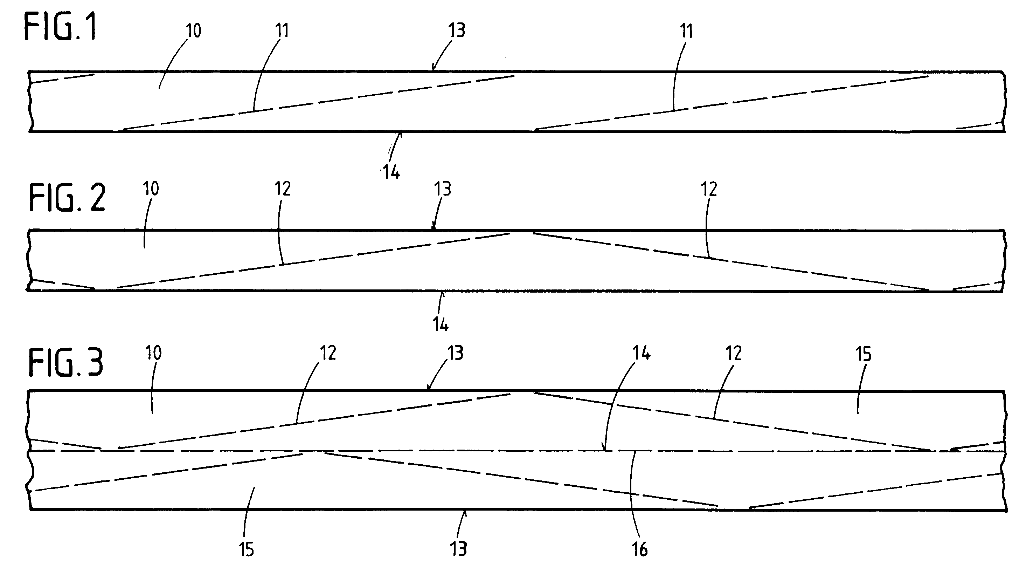

Bei dem in Fig. 1 dargestellten Ausführungsbeispiel verlaufen die die Kunststoffolienbahn 10 mit einem verhältnismäßig kleinen Winkel zur Bandlängsrichtung schräg durchquerenden Reißlinien 11 im wesentlichen parallel zueinander mit einem Abstand in Bandlängsrichtung von etwa 1,5 m. In Verbindung mit dem entsprechenden Schrägverlauf der Reißlinien 11 wird somit zuverlässig erreicht, daß das Band 10 auf seiner gesamten Länge an jeder Stelle von einer der parallel zueinander verlaufenden Reißlinien 11 erfaßt ist.

Bei dem in Fig. 2 dargestellten Ausführungsbeispiel verlaufen die die Kunststoffolienbahn 10 mit einem verhältnismäßig kleinen Winkel zur Bandlängsrichtung schräg durchquerenden Reißlinien 12 in abwechselnder Reihenfolge entgegengesetzt schräg. Jeweils die benachbarten, in abwechselnder Reihenfolge entgegengesetzt schräg verlaufenden Reißlinien 12 stoßen dabei an den Längskanten 13, 14 des Bandes 10 aneinander. Dadurch wird ebenfalls in einfacher Weise erreicht, daß in Längsrichtung des Bandes 10 an jeder Stelle des Bandes 10 eine Reißlinie 12 vorhanden ist. Egal an welcher Stelle des Bandes 10 eine Maschine bei maschinell durchzuführenden Erdarbeiten angreift, wird zuverlässig ein Reißen des Bandes 10 entlang einer der Reißlinien 12 bewirkt.

Bei dem in der Fig. 3 dargestellten Ausführungsbeispiel ist die das Band 10 bildende Kunststoffolienbahn in mindestens zwei trennbar zusammenhängende Bandstreifen 15 unterteilt. Die mit einem verhältnismäßig kleinen Winkel schräg zur Bandlängsrichtung verlaufenden Reißlinien 12 durchqueren dabei jeweils die Breite der Bandstreifen 15. Die das Band 10 bildenden Bandstreifen 15 sind dabei mit einer perforierten Teillinie 16 trennbar miteinander verbunden. Beim maschinellen Zerreißen des Bandes 10 werden somit beide Bandstreifen zerrissen, wodurch sich lange Bandenden bilden, insbesondere wenn die in dem einen Bandstreifen 15 vorgesehenen Reißlinien 12 in Längsrichtung des Bandes 10 gegenüber den Reißlinien 12 des benachbarten Bandstreifens versetzt sind. Dabei kann das Band auch streckenweise an der perforierten Teillinie 16 reißen.

Bei allen Ausführungsbeispielen kann auf der das Band 10 bildenden und die Reißlinien 11, 12 aufweisenden Kunststoffolienbahn mindestens einseitig eine zweite, nicht näher dargestellte Kunststoffolienbahn mit einer geringen Reißfestigkeit aufgelegt und durch Kleben, Schweißen od.dgl. befestigt werden. Dabei kann von den beiden aufeinanderliegenden Kunststoffolienbahnen mindestens eine durchsichtig sein und mindestens eine der beiden Kunststoffolienbahnen auf der der anderen Kunststoffolienbahnen zugekehrten Seite einen Farbdruck oder eine Beschriftung aufweisen. Da der Farbdruck oder die Beschriftung zwischen den beiden Kunststoffolienbahnen angeordnet ist, wird sie gegen äußere Einflüsse geschützt.

Die Reißlinien 11, 12 können auch in beiden aufeinanderliegenden Kunststoffolienbahnen vorgesehen sein. Weiterhin ist es auch möglich, bei dem in Fig. 3 dargestellten Ausführungsbeispiel statt entgegengesetzt schräg verlaufende Reißlinien 12 parallel verlaufende Reißlinien 11 vorzusehen.

## Patentansprüche

1. Band, das aus Warnfarbe aufweisender Kunststoffolie mit verhältnismäßig großer Reißfestigkeit besteht, und mit Abstand oberhalb von unterirdischen Leitungen für Strom, Gas, Wasser od.dgl. im Erdreich verlegbar ist und insbesondere bei maschinell durchzuführenden Erdarbeiten auf die darunterliegenden Leitungen hinweist, wobei die das Band (10) bildende und eine verhältnismäßig große Reißfestigkeit aufweisende Kunststoffolienbahn in vorbestimmten Längsabständen mit perforierten Reißlinien (11,12) für ein ggf. beim Erdaushub erfolgendes Zerreißen in vorbestimmter Form vorbereitet ist, **dadurch gekennzeichnet,** daß jede Reißlinie (11,12) mit einem verhältnismäßig kleinen Winkel schräg zur Bandlängsrichtung verläuft.

2. Band nach Anspruch 1, dadurch gekennzeichnet, daß jede der mit einem verhältnismäßig kleinen Winkel schräg zur Bandlängsrichtung verlaufenden Reißlinien (11,12) insbesondere geradlinig die gesamte Breite des Bandes (10) durchqueren.

3. Band nach Anspruch 1, dadurch gekennzeichnet, daß die das Band (10) bildende Kunststoffolienbahn in mindestens zwei trennbar zusammenhängende Bandstreifen (15) unterteilt ist, und die mit einem verhältnismäßig kleinen Winkel schräg zur Bandlängsrichtung verlaufenden Reißlinien (11,12) insbesondere geradlinig jeweils die Breite der Bandstreifen (15) durchqueren.

4. Band nach Anspruch 3, dadurch gekennzeichnet, daß die das Band (10) bildenden Bandstreifen (15) mit einer perforierten Teillinie (16) trennbar miteinander verbunden sind.

5. Band nach einem der Ansprüche 1 bis 4, dadurch gekennzeichnet, daß jede der mit einem verhältnismäßig kleinen Winkel schräg zur Bandlängsrichtung verlaufenden Reißlinien (11,12) an der einen Längskante (13) des Bandes (10) bzw. des Bandstreifens (15) beginnt und in einem Abstand in Bandlängsrichtung von mindestens 1 m an der anderen Längskante (14) des Bandes (10) bzw. des Bandstreifens (15) endet.

6. Band nach Anspruch 5, dadurch gekennzeichnet, daß jede der mit einem verhältnismäßig kleinen Winkel schräg zur Bandlängsrichtung verlaufenden Reißlinien (11,12) an der einen Längskante (13) des Bandes (10) bzw. des Bandstreifens (15) beginnt und in einem Abstand in Bandlängsrichtung von etwa 1,5 m an der anderen Längskante (14) des Bandes (10) bzw. des Bandstreifens (15) endet.

7. Band nach einem der Ansprüche 1 bis 6, dadurch gekennzeichnet, daß die mit einem verhältnismäßig kleinen Winkel schräg zur Bandlängsrichtung angeordneten Reißlinien (11) im wesentlichen parallel zueinander mit einem Abstand in Bandlängsrichtung von mindestens 1 m verlaufen.

8. Band nach Anspruch 7, dadurch gekennzeichnet, daß die mit einem verhältnismäßig kleinen Winkel schräg zur Bandlängsrichtung angeordneten, parallelen Reißlinien (11) mit einem Abstand in Bandlängsrichtung von etwa 1,5 m verlaufen.

9. Band nach einem der Ansprüche 1 bis 6, dadurch gekennzeichnet, daß die mit einem verhältnismäßig kleinen Winkel schräg zur Bandlängsrichtung angeordneten Reißlinien (12) in abwechselnder Reihenfolge entgegengesetzt schräg verlaufen.

10. Band nach Anspruch 9, dadurch gekennzeichnet, daß jeweils die benachbarten, in abwechselnder Reihenfolge entgegengesetzt schräg verlaufenden Reißlinien (12) an den Längskanten (13,14) des Bandes (10) bzw. des Bandstreifens (15) aneinanderstoßen.

11. Band nach einem der Ansprüche 1 bis 10, dadurch gekennzeichnet, daß bei aus mindestens zwei Bandstreifen (15) bestehenden Bändern (10) die in dem einen Bandstreifen (15) vorgesehenen Reißlinien (11,12) in Längsrichtung des Bandes (10) gegenüber den Reißlinien (11,12) des benachbarten Bandstreifens (15) versetzt sind.

12. Band nach einem der Ansprüche 1 bis 11, dadurch gekennzeichnet, daß auf der das Band (10) bildenden und die Reißlinien (11,12) aufweisenden Kunststoffolienbahnen (10) mindestens einseitig eine zweite Kunststoffolienbahn mit einer geringen Reißfestigkeit aufgelegt und durch Kleben, Schweißen od.dgl. befestigt ist.

13. Band nach Anspruch 12, dadurch gekennzeichnet, daß von den beiden aufeinanderliegenden Kunststoffolienbahnen mindestens eine durchsichtig ist, und mindestens eine der beiden Kunststoffolienbahnen auf der der anderen Kunststoffolienbahn zugekehrten Seite einen Farbdruck und/oder eine Beschriftung aufweist.

## Claims

1. Band composed of plastics foil with a warning colour, with a comparatively high degree of resistance to tearing, which can be laid in the earth at a distance above underground pipelines for electricity, gas, water or the like, and indicates the underlying pipelines in particular during earth working which has to be done using machinery, wherein the web of plastics foil forming the band (10) is prepared with perforated tear lines (11, 12) at predetermined distances apart for tearing in a pre-determined shape during possible tearing resulting from digging up of the ground, characterised in that each tear line (11, 12) runs diagonally at a comparatively small angle with respect to the longitudinal direction of the band.

2. Band according to claim 1, characterised in that each of the tear lines (11, 12) running diagonally at a comparatively small angle with respect to the longitudinal direction of the band crosses the entire width of the band (10) in particular in a straight line.

3. Band according to claim 1, characterised in that the web of plastics foil forming the band (10) is divided into at least separable band strips (15) joined together, and the tear lines (11, 12) running diagonally at a comparatively small angle with respect to the longitudinal direction of the band respectively cross the entire width of the band strips (15) in particular in a straight line.

4. Band according to claim 3, characterised in that the band strips (15) forming the band (10) are connected together by means of a perforated dividing line (16).

5. Band according to one of claims 1 to 4, characterised in that each of the tear lines (11, 12) running diagonally at a comparatively small angle with respect to the longitudinal direction of the band begins at one long edge (13) of the band (10) or the band strip (15) and ends at a distance of at least 1 m along the longitudinal direction of the band at the other edge (14) of the band (10) or the band strip (15).

6. Band according to claim 5, characterised in that each of the tear lines (11, 12) running diagonally at a comparatively small angle with respect to the longitudinal direction of the band begins at one long edge (13) of the band (10) or the band strip (15) and ends at a distance of approximately 1.5 m along the longitudinal direction of the band at the other edge (14) of the band (10) or the band strip (15).

7. Band according to one of claim 1 to 6, characterised in that the tear lines (11) arranged diagonally at a comparatively small angle with respect to the longitudinal direction of the band run substantially parallel to one another at a distance apart of at least 1m in the longitudinal direction of the band.

8. Band according to claim 7, characterised in that the parallel tear lines (11) arranged diagonally at a comparatively small angle with respect to the longitudinal direction of the band run at a distance apart of at least 1.5 m in the longitudinal direction of the band.

9. Band according to one of claims 1 to 6, characterised in that each of the tear lines (12) running diagonally at a comparatively small angle with respect to the longitudinal direction of the band run diagonally alternately in opposite directions.

10. Band according to claim 9, characterised in that the respective adjacent tear lines (12) running diagonally alternately in opposite directions meet one another on the long edges (13, 14) of the band (10) or band strip (15).

11. Band according to one of claims 1 to 10, characterised in that in the case of bands (10) composed of at least two band strips (15), the tear lines (11, 12) provided in one band strip (15) are offset in the longitudinal direction of the band (10) with respect to the tear lines (11, 12) of the adjacent band strip (15).

12. Band according to one of claims 1 to 11, characterised in that a second web of plastics foil with a lower resistance to tearing is laid and fixed by gluing, welding or the like to at least one side of the web 10 of plastics foil forming the band (10) and provided with the tear lines (11, 12).

13. Band according to claim 12, characterised in that at least one of the two webs of plastics foil lying on top of one another is transparent, and at least one of the webs of plastics foil is provided with colour printing or lettering on the side facing the other web of plastics foil.

## Revendications

1. Ruban qui est constitué d'une feuille de matière synthétique présentant une couleur de signalisation et une résistance relativement élevée à la déchirure, qui peut être déposé dans le sol à distance au dessus de conduites souterraines d'électricité, de gaz, d'eau ou analogue et qui signale la présence des conduites sousjacentes, en particulier lors de travaux de terrassement devant être exécutés par une machine,
dans laquelle la bande de film de matière synthétique, formant le ruban (10) et présentant une résistance relativement élevée à la déchirure, est préparée sous une forme prédéterminée avec des lignes de déchirure (11, 12) présentant des perforations et disposées à des distances longitudinales prédéterminées en vue d'un éventuel déchirage effectué lors du creusement du sol, caractérisé en ce que chaque ligne de déchirure (11, 12) s'étend obliquement sous un angle relativement faible par rapport à la direction longitudinale du ruban.

2. Ruban selon la revendication 1, caractérisé en ce que chacune des lignes de déchirure (11, 12) s'étendant obliquement sous un angle relativement faible par rapport à la direction longitudinale du ruban traverse l'ensemble de la largeur du ruban (10), en particulier selon une ligne droite.

3. Ruban selon la revendication 1, caractérisé en ce que la bande de film de matière synthétique formant le ruban (10) est divisée en au moins deux lanières (15) de ruban séparables disposées de manière contiguë et en ce que les lignes de déchirure (11, 12) s'étendant obliquement sous un angle relativement faible par rapport à la direction longitudinale du ruban traversent, à chaque fois, la largeur des lanières (15) de ruban, en particulier selon une ligne droite.

4. Ruban selon la revendication 3, caractérisé en ce que les lanières (15) de ruban constituant le ruban (10) sont reliées l'une à l'autre de manière séparable au moyen d'une ligne de partage (16) présentant des perforations.

5. Ruban selon l'une quelconque des revendications 1 à 4, caractérisé en ce que chacune des lignes de déchirure (11, 12) s'étendant obliquement sous un angle relativement faible par rapport à la direction longitudinale du ruban commence à l'un des bords longitudinaux (13) du ruban (10) ou de la lanière (15) de ruban et se termine à l'autre bord longitudinal (14) du ruban (10) ou de la lanière (15) de ruban à une distance, selon la direction longitudinale du ruban, égale à au moins
1 m.

6. Ruban selon la revendication 5, caractérisé en ce que chacune des lignes de déchirure (11, 12) s'étendant obliquement sous un angle relativement faible par rapport à la direction longitudinale du ruban commence à l'un des bords longitudinaux (13) du ruban (10) ou de la lanière (15) de ruban et se termine à l'autre bord longitudinal (14) du ruban (10) ou de la lanière (15) de ruban à une distance, selon la direction longitudinale du ruban, égale à environ 1,5 m.

7. Ruban selon l'une quelconque des revendications 1 à 6, caractérisé en ce que les lignes de déchirure (11) disposées obliquement sous un angle relativement faible par rapport à la direction longitudinale du ruban s'étendent essentiellement de manière parallèle l'une par rapport à l'autre à une distance, selon la direction longitudinale du ruban égale à au moins 1 m.

8. Ruban selon la revendication 7, caractérisé en ce que les lignes de déchirure (11) parallèles disposées obliquement sous un angle relativement faible par rapport à la direction longitudinale du ruban s'étendent à une distance, selon la direction longitudinale du ruban, égale à environ 1,5 m.

9. Ruban selon l'une quelconque des revendications 1 à 6, caractérisé en ce que les lignes de déchirure (12) disposées obliquement sous un angle relativement faible par rapport à la direction longitudinale du ruban s'étendent obliquement selon une suite alternée en opposition.

10. Ruban selon la revendication 9, caractérisé en ce que, à chaque fois, les lignes de déchirure (12) voisines s'étendant obliquement selon une suite alternée en opposition se rencontrent sur les bords longitudinaux (13, 14) du ruban (10) ou de la lanière (15) de ruban.

11. Ruban selon l'une quelconque des revendications 1 à 10, caractérisé en ce que, dans le cas de rubans (10) constitués d'au moins deux lanières (15) de ruban, les lignes de déchirure (11, 12) prévues dans l'une des lanières (15) de ruban sont décalées selon la direction longitudinale du ruban (10) par rapport aux lignes de déchirure (11, 12) de la lanière (15) de ruban voisine.

12. Ruban selon l'une quelconque des revendications 1 à 11, caractérisé en ce que, sur les bandes (10) de film de matière synthétique formant le ruban (10) et présentant les lignes de déchirure (11, 12), au moins sur un côté, une deuxième bande de film de matière synthétique présentant une faible résistance à la déchirure est déposée et fixée par collage, soudure ou analogue.

13. Bande selon la revendication 12, caractérisé en ce qu'au moins une des deux bandes de film de matière synthétique disposées l'une sur l'autre est transparente et en ce qu'au moins une des deux bandes de film de matière synthétique présente une couleur imprimée et/ou une inscription sur le côté dirigé vers l'autre bande de film de matière synthétique.
